# EUROPÄISCHE PATENTSCHRIFT

(11) **EP 3 014 685 B1**
(45) Veröffentlichungstag und Bekanntmachung des Hinweises auf die Patenterteilung: **01.05.2019**
(21) Anmeldenummer: 14734421.2
(22) Anmeldetag: 18.06.2014
(51) Int. Cl.: H01M 8/12, H01M 4/86

(54) **HOCHTEMPERATURZELLE MIT PORÖSER GASFÜHRUNGSKANALSCHICHT**
HIGH-TEMPERATURE CELL WITH A POROUS GAS-CONDUCTING CHANNEL LAYER
ÉLÉMENT À HAUTE TEMPÉRATURE COMPRENANT UNE COUCHE POREUSE DE CONDUITS DE GUIDAGE DE GAZ

(30) Priorität: 28.06.2013 DE 102013212624
(43) Veröffentlichungstag der Anmeldung: 04.05.2016
(73) Patentinhaber: Robert Bosch GmbH, 70442 Stuttgart (DE)
(72) Erfinder: THOBEN, Birgit, 70839 Gerlingen (DE); MOC, Andre, 02779 Grossschoenau (DE)
(86) Internationale Anmeldenummer: PCT/EP2014/062794
(87) Internationale Veröffentlichungsnummer: WO 2014/206827

(56) Entgegenhaltungen:
- WO-A1-2008/143657
- DE-A1- 19 547 700
- US-A- 5 589 017
- US-A1- 2010 151 345

## Beschreibung

Die vorliegende Erfindung betrifft eine Hochtemperaturzelle, ein Hochtemperaturzellenstack sowie ein Herstellungsverfahren.

### Stand der Technik

Es ist bekannt elektrisch leitfähige Gläser zur elektrischen Kontaktierung von Hochtemperaturstacks, wie Hochtemperaturbrennstoffzellenstacks, zu verwenden. Über die Lebensdauer können die Gläser jedoch in die Elektroden, insbesondere die Kathodenelektrode, hineinfließen und dabei die Dreiphasengrenze reduzieren, was zu Leistungseinbußen führt.

Es ist auch bekannt in planaren Systemen metallische Interkonnektoren mit geprägten Gasführungskanälen zu verwenden. Hierbei können jedoch Schwierigkeiten bei der Kontaktierung von zu verbindenden Materialien auftreten.

Aus DE 195 47 700 A1 ist eine Elektrode für eine Brennstoffzelle mit zwei Schichten bekannt, bei der die eine Schicht selbsttragend ist und die andere Schicht katalytische Eigenschaften aufweist.

Die WO 2008/143657 A1 offenbart eine Brennstoffzelle mit einer Vielzahl an Unterzellen, wobei die Elektroden der Unterzellen Gasführungskanäle aufweisen. Auch offenbart die US5589017 eine Brennstoffzelle, deren Elektroden Gasführungskanäle aufweisen.

Des Weiteren ist aus US 2010/0151345 A1 eine Brennstoffzelle mit Elektroden bekannt, wobei in den Elektroden Gasführungskanäle ausgebildet sind, die jeweils durch Stützkörper gestützt werden.

### Offenbarung der Erfindung

Gegenstand der vorliegenden Erfindung ist eine Hochtemperaturzelle, wie in den Ansprüchen beschrieben.

Unter einer Hochtemperaturzelle kann insbesondere eine bei einer hohen Temperatur, beispielsweise von ≥ 500 °C, betriebene, insbesondere keramische, elektrochemische Zelle, beispielsweise eine Hochtemperaturbrennstoffzelle (Englisch: Solide Oxide Fuel Cell, SOFC) und/oder eine Hochtemperaturelektrolysezelle (Englisch: Solide Oxide Electrolysis Cell, SOEC) und/oder eine Hochtemperatur-Metall-Luft-Zelle verstanden werden.

Insbesondere kann dabei die Hochtemperaturzelle eine Hochtemperaturbrennstoffzelle (SOFC) und/oder eine Hochtemperaturelektrolysezelle (SOEC) und/oder eine Hochtemperatur-Metall-Luft-Zelle sein. Insbesondere kann die Hochtemperaturzelle eine planare Zelle sein.

Die poröse Ausgestaltung ermöglicht es vorteilhafterweise, dass Gas, beispielsweise Luft oder Brenngas, auch unter dem porösen Material, beispielsweise in eine Elektrode an eine Dreiphasengrenze, eindringen kann, insbesondere was bei Gasführungskanal-bildenden, metallischen Interkonnektoren bisher nicht möglich ist. Vorteilhafterweise kann so wiederum eine Luft- beziehungsweise Brenngasverarmung unter den die Gasführungskanäle begrenzenden Strukturen vermieden werden.

Dadurch, dass die Gasführungskanäle in einer Schicht - und insbesondere nicht im Interkonnektor - ausgebildet sind, kann vorteilhafterweise ein planarer, beispielsweise plattenförmiger, insbesondere unstrukturierter/ungeprägter beziehungsweise Gasführungskanal-freier, Interkonnektor verwendet werden. So kann vorteilhafterweise sehr einfach und kostengünstig ein Interkonnektor bereitgestellt werden. Insbesondere kann dabei auf eine aufwändige Strukturierung des Interkonnektors, beispielsweise durch Prägen einer Kanalstruktur, verzichtet werden.

Dass der Interkonnektor Gasführungskanal-freie ausgestaltet sein kann, hat zudem den Vorteil, dass der Interkonnektor frei von Ecken und Kanten sein kann, welche eine Beschichtung und/oder elektrischen Kontaktierung erschweren könnten. Insbesondere kann so eine Beschichtung mit weniger Aufwand (Prozess und Material) als bei strukturierten Interkonnektoren erzielt werden.

Darüber hinaus kann der Interkonnektor - da dieser Gasführungskanal-freier ausgestaltet sein kann - vorteilhafterweise eine geringere Materialstärke aufweisen beziehungsweise aus weniger Material ausgebildet werden.

Messungen haben gezeigt, dass bei herkömmlichen Hochtemperaturzellen, insbesondere mit einem geprägten, Gasführungskanäle ausbildenden, metallischen Interkonnektor, ein großer Teil der Leistungsverluste bei einem Hochtemperaturstack durch eine suboptimale Kontaktierung der Einzelzellen mit dem Interkonnektor verursacht werden kann. Insbesondere kann nach Verbau von Zellen zu einem Stack eine signifikante Erhöhung des Widerstandes auftreten (Einzelzellwiderstand beispielsweise 0,22 Ohm cm², Stackwiderstand 0,41 - 0,61 Ohm cm²). Es hat sich gezeigt, dass um eine Leistungssteigerung von Stacks aus mehreren gestapelten Zellen zu bewirken, Verbesserungen an der Kontaktierung von essentieller Bedeutung sind.

Im Rahmen einer Ausführungsform umfasst die mindestens eine Gasführungskanäle ausbildende, insbesondere poröse, Schicht ein keramisches Material und/oder ein durch einen keramischen Prozess hergestelltes Material. Insbesondere kann die mindestens eine Gasführungskanäle ausbildende, poröse Schicht aus einem keramischen Material und/oder einem durch einen keramischen Prozess hergestellten Material ausgebildet sein.

Unter einem keramischen Material kann insbesondere sowohl ein (reiner) keramischer Werkstoff, also ein anorganischer, nicht-metallischer Werkstoff, insbesondere welcher durch einen Sintervorgang ausgebildet werden kann, als auch ein Cermet, also ein Verbundwerkstoff aus mindestens einem keramischen Werkstoff und mindestens einem metallischen Werkstoff, insbesondere welcher durch einen Sintervorgang ausgebildet werden kann, verstanden werden.

Unter einem durch einen keramischen Prozess hergestellten Material kann insbesondere ein Material verstanden werden, welches durch Sintern einer Keramikpulver umfassenden Masse hergestellt werden kann. Nach der Herstellung über den keramischen Prozess kann das Material weiterbehandelt, beispielsweise reduziert werden, so dass ein durch einen keramischen Prozess hergestelltes Material nicht zwangsläufig ein keramisches Material sein muss, sondern - wie später näher erläutert - auch ein metallisches Material sein kann.

Dadurch, dass die Gasführungskanäle in einer Schicht aus einem keramischen Material beziehungsweise aus einem durch einen keramischen Prozess hergestellten Material ausgebildet sind, kann vorteilhafterweise die Kontaktierung verbessert werden. Insbesondere können dabei geringere Übergangswiderstände zur Kathode beziehungsweise Anode erzielt werden, da diese ebenfalls ein keramisches Material beziehungsweise ein durch einen keramischen Prozess hergestelltes Material umfassen können. Durch die verbesserte Kontaktierung kann wiederum vorteilhafterweise die Leistung eines Stacks aus mehreren derartigen Zellen gesteigert werden.

Insgesamt kann so vorteilhafterweise auf kostengünstige Weise die Leistung der Hochtemperaturzelle beziehungsweise eines Stacks aus mehreren derartigen Hochtemperaturzellen verbessert werden.

Im Rahmen einer Ausführungsform umfasst die mindestens eine Gasführungskanäle ausbildende, insbesondere poröse, Schicht ein Kathodenmaterial oder ein Anodenmaterial. Dadurch, dass die mindestens eine Gasführungskanäle ausbildende, poröse Schicht ein Kathodenmaterial umfasst, kann vorteilhafterweise eine gute Anbindung der Schicht an die Kathode erzielt werden, wobei dadurch, dass die mindestens eine Gasführungskanäle ausbildende, keramische Schicht ein Anodenmaterial umfasst, vorteilhafterweise eine gute Anbindung der Schicht an die Anode erzielt werden kann.

Beispielsweise kann das Kathodenmaterial ausgewählt werden aus der Gruppe bestehend aus Lanthanstrontiummanganoxid (LSM), Lanthanstrontiumcobaltoxid (LSC), Lanthanstrontiumeisenoxid (LSF), Lanthanstrontiumcobalteisenoxid (LSCF) und Mischungen davon.

Beispielsweise kann das Anodenmaterial Nickel sein.

Die Kanäle für die Gaszuführung beziehungsweise Gasabführung können beispielsweise auf der Kathodenseite und/oder der Anodenseite innerhalb der Elektrode eingearbeitet sein.

Im Rahmen der Erfindung umfasst daher die Kathode eine Gasführungskanäle ausbildende, poröse Kathodengasführungsschicht und/oder umfasst die Anode eine Gasführungskanäle ausbildende, poröse Anodengasführungsschicht. So kann vorteilhafterweise eine bessere Durchströmbarkeit der Elektroden (insbesondere verglichen mit einem herkömmlichen, Gasführungskanäle ausbildenden, gasundurchlässigen, metallischen Interkonnektor) und damit verbunden eine höhere Leistung erzielt werden. Insbesondere können die Kathodengasführungsschicht und/oder die Anodengasführungsschicht aus einem porösen, beispielsweise gasdurchlässig porösen, keramischen Material und/oder einem porösen, beispielsweise gasdurchlässig porösen, durch einen keramischen Prozess hergestellten Material ausgebildet sein. Beispielsweise kann die Kathodengasführungsschicht ein Kathodenmaterial und die Anodengasführungsschicht ein Anodenmaterial umfassen oder daraus ausgebildet sein.

Im Rahmen der Erfindung umfasst die Kathode eine den Elektrolyten (auf einer Seite) bedeckende, insbesondere durchgängige, beispielsweise vollflächige/ununterbrochene/unstrukturierte, Kathodenfunktionsschicht und/oder die Anode eine den Elektrolyten (auf der anderen Seite) bedeckende, insbesondere durchgängige, beispielsweise vollflächige/ununterbrochene/unstrukturierte, Anodenfunktionsschicht. Die Kathodenfunktionsschicht und/oder die Anodenfunktionsschicht können insbesondere aus einem porösen, beispielsweise gasdurchlässig porösen, keramischen Material und/oder einem porösen, beispielsweise gasdurchlässig porösen, durch einen keramischen Prozess hergestellten Material ausgebildet sein. Die Kathodenfunktionsschicht kann insbesondere ein Kathodenmaterial und die Anodenfunktionsschicht ein Anodenmaterial umfassen.

Die Kathodengasführungsschicht ist auf der Kathodenfunktionsschicht aufgebracht. Die Anodengasführungsschicht ist auf der Anodenfunktionsschicht aufgebracht.

Beispielsweise kann die Kathodengasführungsschicht und/oder die Anodengasführungsschicht Stege aus einem porösen, insbesondere gasdurchlässig porösen, Material aufweisen, insbesondere zwischen denen Gasführungskanäle ausgebildet sind. Die Stege können beispielsweise mittels Drucken ausgebildet sein. Die Gasführungskanäle können dabei insbesondere durch die Stege seitlich begrenzt sein. So kann vorteilhafterweise Gas, beispielsweise Luft oder Brenngas, auch unter dem porösen Material, beispielsweise auch unter den die Gasführungskanäle begrenzenden Stegen, in die jeweilige Elektrode an die Dreiphasengrenze eindringen, insbesondere was bei Gasführungskanalbildenden, metallischen Interkonnektoren bisher nicht möglich ist. Vorteilhafterweise kann so wiederum eine Luft- beziehungsweise Brenngasverarmung unter den die Gasführungskanäle begrenzenden Strukturen, beispielsweise Stegen, vermieden werden. Ansonsten können die Gasführungskanäle durch benachbarte Schichten, insbesondere durch die Kathodenfunktionsschicht beziehungsweise Anodenfunktionsschicht einerseits und durch eine weitere Schicht andererseits, beispielsweise durch eine Kathodenkontaktschicht oder durch eine porösen Anbindungsschicht eines Interkonnektors und/oder durch eine dichte Schutzschicht eines Interkonnektors und/oder durch einen Interkonnektor, begrenzt sein.

Im Rahmen der Erfindung weist die Kathodengasführungsschicht eine geringere Porosität als die Kathodenfunktionsschicht und/oder weist die Anodengasführungsschicht eine geringere Porosität als die Anodenfunktionsschicht auf. So kann vorteilhafterweise die mechanische Festigkeit und die elektrische Leitfähigkeit der Zelle beziehungsweise des Stacks optimiert werden. Dadurch, dass die Kathodengasführungsschicht beziehungsweise Anodengasführungsschicht mit einer geringeren Porosität ausgebildet wird als die Kathodenfunktionsschicht beziehungsweise Anodenfunktionsschicht, kann die Kathodengasführungsschicht beziehungsweise Anodengasführungsschicht eine höhere Stabilität aufweisen und damit höheren Anpressdrücken standhalten, insbesondere als im Fall einer höheren Porosität. Zudem kann dadurch, dass die Kathodengasführungsschicht beziehungsweise Anodengasführungsschicht mit einer geringeren Porosität ausgebildet wird als die Kathodenfunktionsschicht beziehungsweise Anodenfunktionsschicht, die Kathodengasführungsschicht beziehungsweise Anodengasführungsschicht eine höhere elektrische Leitfähigkeit aufweisen, insbesondere als im Fall einer höheren Porosität. Die Porosität der Kathodengasführungsschicht und/oder der Anodengasführungsschicht sollte jedoch vorzugsweise so gewählt werden, dass eine Gasdiffusion unter die, die Gasführungskanäle begrenzenden Strukturen, beispielsweise Stege, noch möglich ist und insbesondere dass eine später erläuterte Kontaktschicht noch in die Poren der Kathodengasführungsschicht beziehungsweise Anodengasführungsschicht eindringen kann. Im Dreiphasengebiet der Kathodenfunktionsschicht beziehungsweise Anodenfunktionsschicht ist eine hohe beziehungsweise höhere Porosität sinnvoll.

Die Kathodenfunktionsschicht kann insbesondere aus einem keramischen Material ausgebildet sein. Beispielsweise kann die Kathodenfunktionsschicht aus einem porösen, keramischen Material ausgebildet sein.

Im Rahmen einer weiteren Ausführungsform ist die Kathodenfunktionsschicht aus einer Mischung von Lanthanstrontiummanganoxid (LSM) und dotiertem Zirkonoxid, beispielsweise yttrium-dotiertem Zirkonoxid (YSZ), und/oder aus Lanthanstrontiumcobaltoxid (LSC), und/oder aus Lanthanstrontiumeisenoxid (LSF) und/oder aus Lanthanstrontiumcobalteisenoxid (LSCF) ausgebildet. Beispielsweise kann die Kathodenfunktionsschicht aus einer porösen Mischung von Lanthanstrontiummanganoxid und dotiertem Zirkonoxid, beispielsweise yttrium-dotiertem Zirkonoxid, und/oder aus porösem Lanthanstrontiumcobaltoxid, und/oder aus porösem Lanthanstrontiumeisenoxid und/oder aus porösem Lanthanstrontiumcobalteisenoxid ausgebildet sein. Diese Materialien haben sich zur Ausbildung der Kathodenfunktionsschicht als besonders vorteilhaft erwiesen. Lanthanstrontiummanganoxid kann insbesondere als Mischung mit dotiertem Zirkonoxid eingesetzt werden, um eine lonenleitfähigkeit bereitzustellen. Die übrigen Materialien Lanthanstrontiumcobaltoxid, Lanthanstrontiumeisenoxid und Lanthanstrontiumcobalteisenoxid sind selbst ionenleitend und können daher auch rein beziehungsweise Zirkonoxid-frei eingesetzt werden

Die Kathodengasführungsschicht kann insbesondere ebenfalls aus einem keramischen Material ausgebildet sein. Beispielsweise kann die Kathodengasführungsschicht aus einem porösen, keramischen Material ausgebildet sein.

Die Kathodengasführungsschicht kann grundsätzlich auch aus einer Mischung von Lanthanstrontiummanganoxid und dotiertem Zirkonoxid, beispielsweise yttrium-dotiertem Zirkonoxid, und/oder aus Lanthanstrontiumcobaltoxid, und/oder aus Lanthanstrontiumeisenoxid und/oder aus Lanthanstrontiumcobalteisenoxid ausgebildet sein.

Um eine hohe elektrische Leitfähigkeit zu erzielen, kann die Kathodengasführungsschicht jedoch insbesondere Zirkonoxid-frei sein.

Im Rahmen einer weiteren Ausführungsform ist daher die Kathodengasführungsschicht aus Lanthanstrontiummanganoxid (LSM) und/oder Lanthanstrontiumcobaltoxid (LSC) und/oder Lanthanstrontiumeisenoxid (LSF) und/oder Lanthanstrontiumcobalteisenoxid (LSCF) ausgebildet. Beispielsweise kann die Kathodengasführungsschicht aus porösem Lanthanstrontiummanganoxid und/oder porösem Lanthanstrontiumcobaltoxid und/oder porösem Lanthanstrontiumeisenoxid und/oder porösem Lanthanstrontiumcobalteisenoxid ausgebildet sein. Diese Materialien haben sich zur Ausbildung der Kathodengasführungsschicht als besonders vorteilhaft erwiesen.

Die Anodenfunktionsschicht kann insbesondere aus einem keramischen Material, beispielsweise einem Cermet und/oder einem (reinen) keramischen Werkstoff, ausgebildet sein. Insbesondere kann die Anodenfunktionsschicht aus einem porösen, keramischen Material, beispielsweise einem porösen Cermet und/oder einem porösen, keramischen Werkstoff, ausgebildet sein.

Im Rahmen einer weiteren Ausführungsform ist die Anodenfunktionsschicht aus einer Mischung aus Nickel und dotiertem Zirkonoxid, beispielsweise yttrium-dotiertem Zirkonoxid (YSZ), ausgebildet. Insbesondere kann die Anodenfunktionsschicht aus einer porösen Mischung aus Nickel und dotiertem Zirkonoxid, beispielsweise yttrium-dotiertem Zirkonoxid (YSZ), ausgebildet sein. Dies hat sich zur Ausbildung der Anodenfunktionsschicht als besonders vorteilhaft erwiesen.

Die Anodengasführungsschicht kann insbesondere aus einem durch einen keramischen Prozess hergestellten, metallischen Material oder aus einem keramischen Material, beispielsweise einem Cermet und/oder einem (reinen) keramischen Werkstoff, ausgebildet sein. Insbesondere kann die Anodengasführungsschicht aus einem durch einen keramischen Prozess hergestellten, porösen metallischen Material oder aus einem porösen keramischen Material, beispielsweise einem porösen Cermet und/oder einem porösen, keramischen Werkstoff, ausgebildet sein. Beispielsweise kann die Anodengasführungsschicht durch Reduktion eines durch einen keramischen Prozess hergestellten keramischen Materials, beispielsweise aus Nickeloxid, zu einem metallischen Material, beispielsweise (metallischem) Nickel, insbesondere porösem (metallischen) Nickel, hergestellt sein. Zum Beispiel kann die Reduktion durch eine Hochtemperaturbehandlung in reduzierender Atmosphäre, zum Beispiel Wasserstoffatmosphäre, erfolgen. Dabei kann die Reduktion sowohl im Rahmen eines Herstellungsprozessschrittes als auch vorteilhafterweise beim Einfahren der Zelle beziehungsweise des Stacks erfolgen.

Im Rahmen einer weiteren Ausführungsform ist die Anodengasführungsschicht aus Nickel, insbesondere porösem Nickel, beispielsweise mit einer niedrigen Porosität, ausgebildet. Dies hat sich zur Ausbildung der Anodengasführungsschicht als besonders vorteilhaft erwiesen.

Im Rahmen einer weiteren Ausführungsform weist die Hochtemperaturzelle eine zwischen der Kathode und einem Interkonnektor angeordnete Kathodenkontaktschicht und/oder eine zwischen der Anode und einem Interkonnektor angeordnete Anodenkontaktschicht auf. Durch die Kathodenkontaktschicht beziehungsweise Anodenkontaktschicht kann vorteilhafterweise die elektrische Kontaktierung zwischen der Elektrode und dem Interkonnektor verbessert werden. Dies kann zum Einen darauf beruhen, dass das Material der Kathodenkontaktschicht beziehungsweise der Anodenkontaktschicht darauf abgestimmt ist eine gute Anbindung an die Elektrode einerseits und an den Interkonnektor andererseits zu erzielen. Insbesondere kann dies jedoch dadurch erzielt werden, dass die Kathodenkontaktschicht beziehungsweise die Anodenkontaktschicht als Verbindungsmaterial, beispielsweise ähnlich eines Klebers beziehungsweise eines elektrisch leitfähigen Glases, fungiert.

Die Kathodenkontaktschicht und/oder die Anodenkontaktschicht können insbesondere aus einem dichten Material ausgebildet sein. So kann vorteilhafterweise eine hohe elektrische Leitfähigkeit und mechanische Stabilität erzielt werden.

Beispielsweise können die Kathodenkontaktschicht und/oder die Anodenkontaktschicht aus einem keramischen Material und/oder einem durch einen keramischen Prozess hergestellten Material ausgebildet sein. Beispielsweise kann die Kathodenkontaktschicht ein Kathodenmaterial und die Anodenkontaktschicht ein Anodenmaterial umfassen oder daraus ausgebildet sein.

Im Rahmen einer weiteren Ausführungsform ist die Kathodenkontaktschicht aus Lanthanstrontiummanganoxid (LSM) und/oder Lanthanstrontiumcobaltoxid (LSC) und/oder Lanthanstrontiumeisenoxid (LSF) und/oder Lanthanstrontiumcobalteisenoxid (LSCF); und/oder die Anodenkontaktschicht aus Nickel ausgebildet. Diese Materialien haben sich zur Ausbildung der Kathodenkontaktschicht beziehungsweise der Anodenkontaktschicht als besonders vorteilhaft erwiesen.

Elektrodenseitig kann eine gute Anbindung der Kathodenkontaktschicht beziehungsweise Anodenkontaktschicht dadurch erzielt werden, dass die Kathodenfunktionsschicht/ Anodenfunktionsschicht beziehungsweise die Kathodengasführungsschicht/Anodengasführungsschicht aus einem porösen Material ausgebildet ist, in dessen Poren die Kathodenkontaktschicht/Anodenkontaktschicht eindringen kann. Vorzugsweise weist dafür die Kathodenkontaktschicht und/oder Anodenkontaktschicht im ungesinterten Zustand, insbesondere beim Drucken beziehungsweise als Druckpaste/Druckflüssigkeit, eine gute Fließfähigkeit auf. Gegebenenfalls kann die Anbindung elektrodenseitig und/oder interkonnektorseitig noch dadurch verbessert werden, dass die Oberfläche der zu kontaktierenden Flächen mit einem Plasma geeigneter Energie aktiviert wird.

Um zusätzlich eine gute (oder sogar eine verbesserte) Anbindung der Kathodenkontaktschicht beziehungsweise Anodenkontaktschicht an den Interkonnektor zu erzielen, kann interkonnektorseitig eine Anrauhung des Interkonnektors, beispielsweise mittels Sandstrahlen, und/oder eine poröse Anbindungsschicht auf den Interkonnektor beziehungsweise auf eine auf den Interkonnektor aufgetragenen Schicht, beispielsweise dichte Sperrschicht, aufgetragen werden. So kann vorteilhafterweise die effektive Oberfläche erhöht, die Durchdringung und Benetzung mit der Kontaktschicht deutlich verbessert und dadurch wiederum die Kontaktierung verbessert werden.

Im Rahmen einer Ausgestaltung dieser Ausführungsform sind Gasführungskanäle in der Kathodenkontaktschicht und/oder in der Anodenkontaktschicht ausgebildet. Insbesondere können dabei Gasführungskanäle in der Kathodengasführungsschicht mit Gasführungskanälen in der Kathodenkontaktschicht und/oder Gasführungskanäle in der Anodengasführungsschicht mit Gasführungskanälen in der Anodenkontaktschicht überlappen. So kann vorteilhafterweise der Gasfluss optimiert werden.

Im Rahmen einer anderen Ausgestaltung dieser Ausführungsform ist die Kathodenkontaktschicht und/oder die Anodenkontaktschicht durchgängig, insbesondere Gasführungskanal-frei, beispielsweise vollflächig/ununterbrochen/unstrukturiert, ausgebildet. So kann vorteilhafterweise ein einfacher und mechanisch besonders stabiler Aufbau realisiert werden.

Im Rahmen einer weiteren Ausführungsform umfasst die Hochtemperaturzelle weiterhin mindestens einen planaren, insbesondere metallischen, Interkonnektor. Der mindestens eine planare Interkonnektor kann plattenförmig ausgestaltet sein. Insbesondere kann der mindestens eine planare Interkonnektor Gasführungskanal-frei ausgestaltet sein. So kann die Zelle beziehungsweise der Stack vorteilhafterweise auf einfache und kostengünstige Weise mit Interkonnektoren ausgestattet werden.

Die Interkonnektoren können zum Beispiel aus einem chromhaltigen, beispielsweise ferritischen, Edelstahl, zum Beispiel Cofer 22 APU der Firma Thyssen-Krupp, Deutschland, ausgebildet sein.

Im Rahmen einer Ausgestaltung dieser Ausführungsform ist der mindestens eine Interkonnektor mit einer porösen Anbindungsschicht versehen. Wie im Zusammenhang mit den Kontaktschichten beschrieben kann so vorteilhafterweise die Kontaktierung des Interkonnektors mit der Kontaktschicht verbessert werden. Die poröse Anbindungsschicht kann beispielsweise aus einem Spinell, beispielsweise Mangancobalt-Spinell (MCO), und/oder einem Kathodenmaterial, beispielsweise Lanthanstrontiummanganoxid (LSM) und/oder Lanthanstrontiumcobaltoxid (LSC) und/oder Lanthanstrontiumeisenoxid (LSF) und/oder Lanthanstrontiumcobalteisenoxid (LSCF), und/oder einem Anodenmaterial, beispielsweise einer Mischung von Nickel und dotiertem Zirkonoxid, beispielsweise yttrium-dotiertem Zirkonoxid (YSZ), ausgebildet sein.

Im Rahmen einer anderen, alternativen oder zusätzlichen, Ausgestaltung dieser Ausführungsform ist der mindestens eine Interkonnektor mit einer dichten Schutzschicht versehen. Insbesondere kann es sich bei der dichten Schutzschicht um eine dichte Chromsperrschicht und/oder dichte Korrosionsschutzschicht handeln. So kann vorteilhafterweise ein Ausdampfen von Chrom aus dem Interkonnektormaterial und damit eine Chromvergiftung der Elektroden beziehungsweise eine Korrosion des Interkonnektors vermieden werden. Die dichte Schutzschicht kann beispielsweise aus einem Spinell, beispielsweise Mangancobalt-Spinell (MCO), ausgebildet sein.

Insbesondere kann die poröse Anbindungsschicht aus dem gleichen Material wie die dichte Schutzschicht ausgebildet sein. Dabei können Materialien insbesondere als gleich verstanden werden, welche sich im Wesentlichen in ihrer Porosität beziehungsweise in ihrer Fähigkeit zur Ausbildung einer Porosität unterscheiden. Beispielsweise können die poröse Anbindungsschicht und die dichte Schutzschicht aus einem Spinell, beispielweise Mangancobalt-Spinell (MCO), ausgebildet sein.

Im Rahmen einer weiteren Ausführungsform ist die Hochtemperaturzelle eine Brennstoffzelle und/oder Elektrolysezelle und/oder Metall-Luft-Zelle.

Beispielsweise kann die Hochtemperaturzelle eine anodengeträgerte, planare Zelle (Englisch: Anode Supported Cell, ASC), eine kathodengeträgerte, planare Zelle (Englisch: Cathode Supported Cell, CSC), eine elektrolytgeträgerte, planare Zelle (Englisch: Electrolyte Supported Cell, ESC), eine metallgeträgerte, planare Zelle (Englisch: Metal Supported Cell, MSC) und/oder eine inertmaterialgeträgerte, planare Zelle sein.

Hinsichtlich weiterer technischer Merkmale und Vorteile der erfindungsgemäßen Hochtemperaturzelle wird hiermit explizit auf die Erläuterungen im Zusammenhang mit dem erfindungsgemäßen Hochtemperaturzellenstack, dem erfindungsgemäßen Herstellungsverfahren, der erfindungsgemäßen Kraft-Wärme-Kopplungsanlage sowie auf die Figuren und die Figurenbeschreibung verwiesen.

Weiterhin betrifft die Erfindung ein Hochtemperaturzellenstack, welches einen Stapel aus zwei oder mehr erfindungsgemäßen Hochtemperaturzellen umfasst.

Hinsichtlich weiterer technischer Merkmale und Vorteile des erfindungsgemäßen Hochtemperaturzellenstacks wird hiermit explizit auf die Erläuterungen im Zusammenhang mit der erfindungsgemäßen Hochtemperaturzelle, dem erfindungsgemäßen Herstellungsverfahren, der erfindungsgemäßen Kraft-Wärme-Kopplungsanlage sowie auf die Figuren und die Figurenbeschreibung verwiesen.

Ein weiterer Gegenstand der vorliegenden Erfindung ist ein Verfahren zur Herstellung einer, insbesondere planaren, Hochtemperaturzelle beziehungsweise eines Hochtemperaturzellenstacks. Insbesondere kann durch das Verfahren eine erfindungsgemäße Hochtemperaturzelle und/oder ein erfindungsgemäßer Hochtemperaturzellenstack hergestellt werden.

Das Verfahren kann insbesondere einen Verfahrensschritt umfassen, in dem eine Funktionsschicht, insbesondere eine Kathodenfunktionsschicht und/oder Elektrolytschicht und/oder Anodenfunktionsschicht, sowie gegebenenfalls eine oder mehrere weitere Schichten, gedruckt werden. Das Drucken der Schichten kann dabei auf einemTräger erfolgen, insbesondere welcher eine der Funktionsschichten ausbilden oder metallisch beziehungsweise inert sein kann. Der Träger kann beispielsweise mittels Gießens, zum Beispiel Foliengießens, ausgebildet sein.

Weiterhin kann das Verfahren einen Verfahrensschritt umfassen, in dem eine Schicht, welche abschnittsweise aus einem rückstandsfrei verbrennbaren Material, insbesondere aus einem Kohlenstoff beziehungsweise kohlehaltigen Material, beispielsweise Ruß, und abschnittsweise aus einem keramischen Material oder einer Vorstufe zur Ausbildung eines keramischen Materials ausgebildet ist, auf die Funktionsschicht gedruckt wird.

Zudem kann das Verfahren einen Verfahrensschritt umfassen, in dem die Schichten cogesintert, also gemeinsam beziehungsweise gleichzeitig gesintert, werden. Dabei kann insbesondere das rückstandsfrei verbrennbare Material ausbrennen.

Durch die Verwendung der Drucktechnik können die gewünschten Gasführungskanäle zur Gasversorgung vorteilhafterweise einfach in Form der Abschnitte aus dem rückstandsfrei verbrennbaren Material mit der Elektrode gedruckt und beim Sintern durch Ausbrennen des rückstandsfrei verbrennbaren Materials schließlich zu Gasführungskanälen freigebrannt werden.

Im Rahmen einer Ausführungsform wird, beispielsweise vor oder nach dem Cosintern, eine Kathodenkontaktschicht und/oder eine Anodenkontaktschicht auf einen Interkonnektor oder auf die abschnittsweise ausgebildete Schicht, insbesondere auf deren keramische Schichtabschnitte, gedruckt, wobei die Schichtanordnung und ein Interkonnektor derart gestapelt werden, dass die Kathodenkontaktschicht beziehungsweise Anodenkontaktschicht die Schichtanordnung mit dem Interkonnektor verbindet.

Insbesondere kann dies nach dem Cosintern der Schichten erfolgen. Dies hat den Vorteil, dass beim Cosintern der Schichten Porenbildner ausgebrannt werden können, so dass die Kathodenkontaktschicht beziehungsweise Anodenkontaktschicht poröse Schichtabschnitte kontaktieren und in ihrem fließfähigen Zustand teilweise in diese hineinfließen kann, wodurch eine besonders gute Kontaktierung erzielt werden kann.

Der Interkonnektor kann beispielsweise mit einer aufgerauhten Oberfläche versehen werden beziehungsweise sein. Beispielsweise kann der Interkonnektor gesandstrahlt werden beziehungsweise sein.

Alternativ oder zusätzlich dazu kann der Interkonnektor mit einer porösen Anbindungsschicht versehen werden beziehungsweise sein.

Die Kathodenkontaktschicht und/oder Anodenkontaktschicht wird vorzugsweise mit einer Fließfähigkeit bereitgestellt, welche es ermöglicht, dass die Kathodenkontaktschicht und/oder Anodenkontaktschicht beim Drucken in eine aufgerauhte beziehungsweise poröse Oberfläche einer darunter liegenden Schicht eindringen kann. So kann die Kontaktschicht in beide darüber zu verbindenden Materialien eindringen und auf diese Weise eine optimale Verbindung der Materialien bewirken.

Das Eindringen der Kathodenkontaktschicht und/oder Anodenkontaktschicht kann zusätzlich dadurch begünstigt werden, dass die porösen beziehungsweise aufgerauhten Oberflächen vor dem Aufdrucken der Kathodenkontaktschicht beziehungsweise Anodenkontaktschicht mit Plasma behandelt werden. Auf diese Weise erhalten die Oberflächen vorteilhafterweise deutlich bessere Benetzungseigenschaften, was es ermöglicht, dass die Kontaktschicht besonders gut in das poröse beziehungsweise aufgerauhte Material fließen kann.

Im Rahmen einer speziellen Ausführungsform umfasst das Verfahren, insbesondere zur Ausbildung einer Zelle, die Verfahrensschritte:
(a) Gießen, beispielsweise Foliengießen, eines Trägers, insbesondere wobei der Träger die Zelle trägt, und beispielsweise die größte Schichtdicke der Schichten der Zelle aufweist, und wobei der Träger eine Anodenfunktionsschicht (anodengeträgerte Zelle, ASC) oder eine Kathodenfunktionsschicht (kathodengeträgerte Zelle, CSC) oder ein Elektrolyt (elektrolytgeträgerte Zelle, ESC) oder ein Metall beziehungsweise eine Metalllegierung (metallgeträgerte Zelle, MSC) oder ein Inertmaterial (inertmaterialgeträgerte Zelle) ist,
(b) Gegebenenfalls Schneiden des Trägers auf Zellmaße,
(c) Gegebenenfalls Ansintern des Trägers,
(d) Drucken der übrigen Funktionsschichten auf den Träger, insbesondere derart, dass ein Funktionsschichtsystem ausgebildet wird, welches
   - gegebenenfalls einen Stromsammler (Anodenstromsammler),
   - eine abschnittsweise aus rückstandsfrei verbrennbarem Material und abschnittsweise aus keramischem Material beziehungsweise einer Vorstufe zur Ausbildung eines keramischen Materials ausgebildete Schicht, insbesondere zur Ausbildung einer Anodengasführungsschicht, gegebenenfalls auf die Stromsammlerschicht (Anodenstromsammler),
   - eine Anodenfunktionsschicht, insbesondere auf der abschnittsweise ausgebildeten Schicht;
   - einen Elektrolyten, insbesondere auf der Anodenfunktionsschicht, sowie gegebenenfalls eine oder mehrere Schutzschichten auf dem Elektrolyten,
   - eine Kathodenfunktionsschicht, insbesondere auf dem Elektrolyten beziehungsweise gegebenenfalls einer Schutzschicht davon,
   - eine abschnittsweise aus rückstandsfrei verbrennbarem Material und abschnittsweise aus keramischem Material beziehungsweise einer Vorstufe zur Ausbildung eines keramischen Materials ausgebildete Schicht, insbesondere zur Ausbildung einer Kathodengasführungsschicht, insbesondere auf der Kathodenfunktionsschicht, und
   - gegebenenfalls einen Stromsammler (Kathodenstromsammler), insbesondere auf der abschnittsweise ausgebildeten Schicht, umfasst,
e) Cosintern.

Zwischen den Druckschritten der Funktionsschichten kann das Verfahren gegebenenfalls noch einen oder mehr weitere Cosinterschritte aufweisen.

Insbesondere kann eine Zelle einen Kathodenstromsammler und einen Anodenstromsammler aufweisen. Der Kathodenstromsammler und/oder der Anodenstromsammler können insbesondere aus einem keramischen Material und/oder einem durch einen keramischen Prozess hergestellten Material ausgebildet sein. Gegebenenfalls können der Kathodenstromsammler und/oder der Anodenstromsammler dicht ausgestaltet sein.

Der Kathodenstromsammler kann zum Beispiel aus einem, gegebenenfalls dichten, keramischen Material ausgebildet sein. Beispielsweise kann der Kathodenstromsammler aus Lanthanstrontiummanganoxid (LSM) und/oder Lanthanstrontiumcobaltoxid (LSC) und/oder Lanthanstrontiumeisenoxid (LSF) und/oder Lanthanstrontiumcobalteisenoxid (LSCF) ausgebildet sein.

Der Anodenstromsammler kann zum Beispiel aus einem, gegebenenfalls dichten, durch einen keramischen Prozess hergestellten, metallischen Material oder aus einem, gegebenenfalls dichten, keramischen Material, beispielsweise Cermet und/oder (reinem) keramischen Werkstoff, ausgebildet sein. Beispielsweise kann der Anodenstromsammler aus Nickel ausgebildet sein.

Zum Beispiel kann das Verfahren zur Ausbildung einer anodengeträgerte Zelle die folgenden Verfahrensschritte umfassen:
(1) Gießen, beispielsweise Foliengießen, eines Trägers, wobei der Träger eine Anodenfunktionsschicht ist,
(2) Gegebenenfalls Schneiden des Trägers auf Zellmaße,
(3) Gegebenenfalls Ansintern des Trägers,
(4) Gegebenenfalls Drucken einer (zusätzlichen) Anodenfunktionsschicht auf eine Seite des Trägers,
(5) Drucken eines Elektrolyten, insbesondere auf die Anodenfunktionsschicht, sowie gegebenenfalls einer oder mehrerer Schutzschichten auf den Elektrolyten,
(6) Gegebenenfalls Cosintern, zum Beispiel bei 1400 °C,
(7) Drucken einer Kathodenfunktionsschicht auf den Elektrolyten beziehungsweise dessen Schutzschicht/en,
(8) Drucken einer abschnittsweise aus rückstandsfrei verbrennbarem Material und abschnittsweise aus keramischem Material beziehungsweise einer Vorstufe zur Ausbildung eines keramischen Materials ausgebildeten Schicht, insbesondere zur Ausbildung einer Kathodengasführungsschicht, auf die Kathodenfunktionsschicht,
(9) Gegebenenfalls Drucken eines Stromsammlers (Kathodenstromsammler) auf die abschnittsweise ausgebildete Schicht,
(10) Drucken einer abschnittsweise aus rückstandsfrei verbrennbarem Material und abschnittsweise aus keramischem Material beziehungsweise einer Vorstufe zur Ausbildung eines keramischen Materials ausgebildeten Schicht, insbesondere zur Ausbildung einer Anodengasführungsschicht, auf die andere Seite des Trägers,
(11) Gegebenenfalls Drucken eines Stromsammlers (Anodenstromsammler) auf die abschnittsweise ausgebildete Schicht auf der anderen Seite des Trägers, und
(12) Cosintern, beispielsweise bei 1200 °C.

Zum Beispiel kann das Verfahren zur Ausbildung einer inertgeträgerten Zelle die folgenden Verfahrensschritte umfassen:
(1') Gießen, beispielsweise Foliengießen, eines Trägers, wobei der Träger eine porös sinternde Inertmaterialschicht ist,
(2') Gegebenenfalls Schneiden des Trägers auf Zellmaße,
(3') Gegebenenfalls Ansintern des Trägers,
(4') Gegebenenfalls Drucken eines Stromsammlers (Anodenstromsammler),
(5') Drucken einer abschnittsweise aus rückstandsfrei verbrennbarem Material und abschnittsweise aus keramischem Material beziehungsweise einer Vorstufe zur Ausbildung eines keramischen Materials ausgebildeten Schicht, insbesondere zur Ausbildung einer Anodengasführungsschicht,
(6') Drucken einer Anodenfunktionsschicht auf die abschnittsweise ausgebildete Schicht,
(7') Drucken eines Elektrolyten auf die Anodenfunktionsschicht, sowie gegebenenfalls einer oder mehrerer Schutzschichten auf den Elektrolyten,
(8') Gegebenenfalls Cosintern,
(9') Drucken einer Kathodenfunktionsschicht auf den Elektrolyten beziehungsweise dessen Schutzschicht/en,
(10') Drucken einer abschnittsweise aus rückstandsfrei verbrennbarem Material und abschnittsweise aus keramischem Material beziehungsweise einer Vorstufe zur Ausbildung eines keramischen Materials ausgebildeten Schicht, insbesondere zur Ausbildung einer Kathodengasführungsschicht auf die Kathodenfunktionsschicht,
(11') Gegebenenfalls Drucken eines Stromsammlers (Kathodenstromsammler) auf die abschnittsweise ausgebildete Schicht,
(12') Cosintern.

Die in Klammern gegebenen Zahlen geben eine mögliche aber nicht unbedingt zwingende Reihenfolge an. Insbesondere können die Anodenseite und Kathodenseite in umgekehrter Reihenfolge ausgebildet werden.

Zur Ausbildung des Interkonnektors kann das Verfahren dabei die folgenden Verfahrensschritte umfassen:
(I) Bereitstellen eines planaren, insbesondere metallischen, Interkonnektors
(II) Gegebenenfalls Beschichten, beispielsweise einseitiges oder beidseitiges Beschichten, des planaren Interkonnektors mit einer dichten Schutzschicht, beispielsweise Diffusionsschutzschicht/Diffusionsbarriere/Diffusionssperrschicht und/oder Gegebenenfalls Beschichten, beispielsweise beidseitiges oder einseitiges Beschichten, des planaren Interkonnektors oder der dichten Schutzschicht mit einer porösen Anbindungsschicht
(III) Drucken einer Anodenkontaktschicht auf eine Seite, beispielsweise Brenngasseite, des Interkonnektors, und
(IV) Drucken einer Kathodenkontaktschicht auf die andere Seite, beispielsweise eine Luftseite, des Interkonnektors.

Die in Klammern gegebenen Zahlen geben eine möglich aber nicht unbedingt zwingende Reihenfolge an. Insbesondere können die Anodenseite und Kathodenseite in umgekehrter Reihenfolge ausgebildet werden.

Zur Ausbildung des Stacks kann das Verfahren insbesondere den folgenden Verfahrensschritt:
Stapeln mindestens einer Zellanordnung, insbesondere von mindestens zwei Zellanordnungen, zum Beispiel aus Verfahrensschritt e), 12) oder 12'), und mindestens eines Interkonnektors, beispielsweise aus Verfahrensschritt IV), zu einem Stack, insbesondere wobei ein Interkonnektor über die Kathodenkontaktschicht und/oder die Anodenkontaktschicht mit einer Zellanordnung verbunden wird.

Vor oder nach dem Stapeln kann insbesondere eine Glasdichtung auf die Seitenflächen beziehungsweise Außenflächen der Zellen oder des Stacks, beispielsweise mittels Dispensen, aufgebracht werden. So können poröse Schichten nach Außen abgedichtet werden.

Das Aushärten der Kathodenkontaktschicht beziehungsweise der Anodenkontaktschicht kann beim Einfahren des Stacks oder gegebenenfalls auch in einem weiteren Herstellungsverfahrenschritt, zum Beispiel Sinterschritt, erfolgen.

Hinsichtlich weiterer technischer Merkmale und Vorteile des erfindungsgemäßen Herstellungsverfahrens wird hiermit explizit auf die Erläuterungen im Zusammenhang mit der erfindungsgemäßen Hochtemperaturzelle, dem erfindungsgemäßen Hochtemperaturzellenstack, der erfindungsgemäßen Kraft-Wärme-Kopplungsanlage sowie auf die Figuren und die Figurenbeschreibung verwiesen.

Ferner betrifft die vorliegende Erfindung ein Energiesystem, insbesondere eine Kraft-Wärme-Kooplungsanlage (KWK), beispielsweise eine Mikro-Kraft-Wärme-Kopplungsanlage (µKWK), welche/s eine erfindungsgemäße Hochtemperaturzelle und/oder einen erfindungsgemäßen Hochtemperaturzellenstack umfasst.

Hinsichtlich weiterer technischer Merkmale und Vorteile des erfindungsgemäßen Energiesystems beziehungsweise der erfindungsgemäßen Kraft-Wärme-Kopplungsanlage wird hiermit explizit auf die Erläuterungen im Zusammenhang mit der erfindungsgemäßen Hochtemperaturzelle, dem erfindungsgemäßen Hochtemperaturzellenstack, dem erfindungsgemäßen Herstellungsverfahren sowie auf die Figuren und die Figurenbeschreibung verwiesen.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch eine erste Ausführungsform einer erfindungsgemäßen Hochtemperaturzelle;
- Fig. 2: einen schematischen Querschnitt durch eine zweite Ausführungsform einer erfindungsgemäßen Hochtemperaturzelle;
- Fig. 3: einen schematischen Querschnitt durch eine dritte Ausführungsform einer erfindungsgemäßen Hochtemperaturzelle;
- Fig. 4: einen schematischen Querschnitt durch eine vierte Ausführungsform einer erfindungsgemäßen Hochtemperaturzelle; und
- Fig. 5: einen schematischen Querschnitt durch eine fünfte Ausführungsform einer erfindungsgemäßen Hochtemperaturzelle.

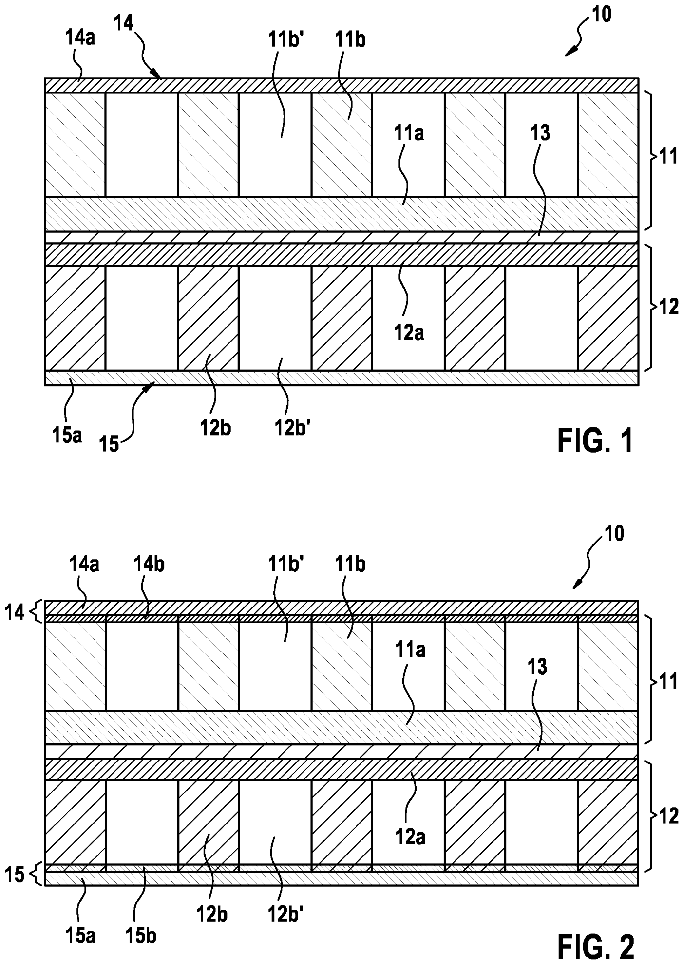

Figur 1 zeigt eine Hochtemperaturzelle 10, beispielsweise eine Hochtemperaturbrennstoffzelle, welche 10 eine Kathode 11, eine Anode 12 und einen zwischen der Kathode 11 und der Anode 12 angeordneten Elektrolyten 13 umfasst.

Figur 1 zeigt, dass die Kathode 11 eine den Elektrolyten 13 bedeckende, insbesondere durchgängige, Kathodenfunktionsschicht 11a und die Anode 12 eine den Elektrolyten 13 bedeckende, insbesondere durchgängige, Anodenfunktionsschicht 12a umfasst.

Zudem zeigt Figur 1, dass die Hochtemperaturzelle 10 zwei planare, metallische Interkonnektoren 14a, 14 und 15a, 15 aufweist.

Figur 1 veranschaulicht, dass die Hochtemperaturzelle zwei poröse Schichten 11b; 12b aufweist, in welchen 11b; 12b Gasführungskanäle 11b'; 12b' ausgebildet sind.

Dabei umfasst die Kathode 11 eine Gasführungskanäle 11b' ausbildende, keramische Kathodengasführungsschicht 11b, welche ein keramisches Kathodenmaterial umfasst und auf der Kathodenfunktionsschicht 11a aufgebracht ist. Die Anode 12 umfasst dabei eine Gasführungskanäle 12b' ausbildende Anodengasführungsschicht 12b, welche ein Anodenmaterial, beispielsweise Nickel, insbesondere welches durch einen keramischen Prozess hergestellt ist, umfasst und auf der Anodenfunktionsschicht 12a aufgebracht ist.

Die Kathodengasführungsschicht 11b und die Anodengasführungsschicht 12b sind dabei aus gasdurchlässig porösen Materialien ausgebildet. So kann vorteilhafterweise Gas durch das Material der Kathodengasführungsschicht 11b und der Anodengasführungsschicht 12b, beispielsweise durch das Material der stegförmigen Abschnitte der Kathodengasführungsschicht 11b und der Anodengasführungsschicht 12b, hindurch zur Kathodenfunktionsschicht 11a beziehungsweise Anodenfunktionsschicht 12a diffundieren.

Die Kathodengasführungsschicht 11b und die Anodengasführungsschicht 12b können insbesondere eine niedrige Porosität und die Kathodenfunktionsschicht 11a und die Anodenfunktionsschicht 12a eine hohe Porosität aufweisen. Insbesondere kann dabei die Kathodengasführungsschicht 11b eine geringere Porosität als die Kathodenfunktionsschicht 11a und die Anodengasführungsschicht 12b eine geringere Porosität als die Anodenfunktionsschicht 12a aufweisen. So kann vorteilhafterweise die mechanische Stabilität und elektrische Leitfähigkeit der Kathodengasführungsschicht 11b beziehungsweise Anodengasführungsschicht 12b optimiert werden.

Im Rahmen der in Figur 1 gezeigten Ausführungsform ist die Kathodengasführungsschicht 11b zwischen der Kathodenfunktionsschicht 11a und einem Interkonnektor 14a, 14 und die Anodengasführungsschicht 12b zwischen der Anodenfunktionsschicht 12a und einem Interkonnektor 15a, 15 ausgebildet.

Die in Figur 2 gezeigte Ausführungsform unterscheidet sich im Wesentlichen dadurch von der in Figur 1 gezeigten Ausführungsform, dass die Interkonnektoren 14;15 planare, metallische Interkonnektoren 14a;15a sind, die jeweils mit einer porösen Anbindungsschicht 14b, 15b versehen sind, wobei die Kathodengasführungsschicht 11b zwischen der Kathodenfunktionsschicht 11a und der porösen Anbindungsschicht 14b des einen Interkonnektors 14 und die Anodengasführungsschicht 12b zwischen der Anodenfunktionsschicht 12a und der porösen Anbindungsschicht 15b des anderen Interkonnektors 15 ausgebildet ist. Durch die porösen Oberfläche 14b, 15b kann vorteilhafterweise die Anbindung an den Interkonnektoren 14,15 verbessert werden.

Figur 2 deutet an, dass dabei beim Drucken der Gasführungsschichten 11b, 12b das Material der Gasführungsschichten 11b, 12b teilweise in die porösen Anbindungsschichten 14b, 15b eindringen und so die Anbindung verbessern kann. Analog dazu - wenn auch in Figur 2 nicht angedeutet - kann Material der der Gasführungsschichten 11b, 12b teilweise in die porösen Funktionsschichten 11a, 12a eindringen und so ebenfalls die Anbindung verbessern.

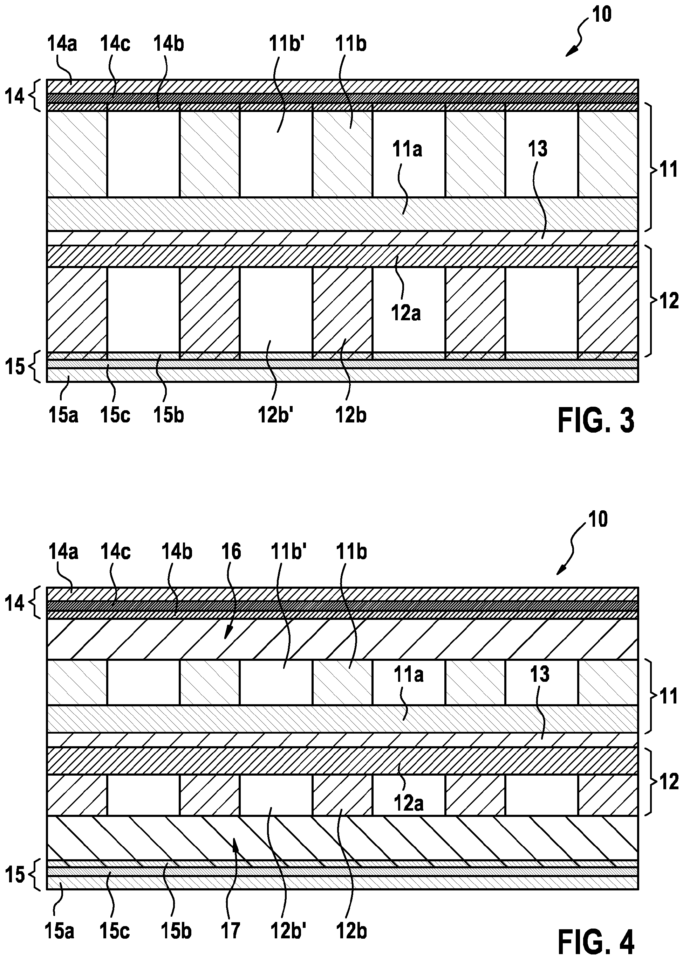

Die in Figur 3 gezeigte Ausführungsform unterscheidet sich im Wesentlichen dadurch von der in Figur 2 gezeigten Ausführungsform, dass die Interkonnektoren 14,15 weiterhin mit einer dichten Schutzschicht 14c, 15c versehen sind. Die dichten Schutzschichten 14c, 15c können beispielsweise als Diffusionssperrschichten dienen, welche ein Austreten von chromhaltigen Verbindungen aus den Interkonnektoren 14a, 15a verhindern.

Figur 3 zeigt, dass dabei jeweils eine dichte Schutzschicht 14c, 15c auf einem planaren metallischen Interkonnektor 14a, 15a aufgebracht ist, wobei jeweils eine poröse Anbindungsschicht 14b, 15b auf einer dichten Schutzschichten 14c, 15c aufgebracht ist. Figur 3 illustriert, dass dabei die Kathodengasführungsschicht 11b zwischen der Kathodenfunktionsschicht 11a und der porösen Anbindungsschicht 14b des einen Interkonnektors 14 und die Anodengasführungsschicht 12b zwischen der Anodenfunktionsschicht 12a und der porösen Anbindungsschicht 15b des anderen Interkonnektors 15 ausgebildet ist.

Die in Figur 4 gezeigte Ausführungsform unterscheidet sich im Wesentlichen dadurch von der in Figur 3 gezeigten Ausführungsform, dass weiterhin eine Kathodenkontaktschicht 16 und eine Anodenkontaktschicht 17 vorgesehen sind. Die Kathodenkontaktschicht 16 ist dabei zwischen der Kathode 11 und einem Interkonnektor 14 angeordnet, wobei die Anodenkontaktschicht 17 zwischen der Anode 12 und einem anderen Interkonnektor 15 angeordnet ist. Die Kathodengasführungsschicht 11b ist dabei zwischen der Kathodenfunktionsschicht 11a und der Kathodenkontaktschicht 16 und die Anodengasführungsschicht 12b zwischen der Anodenfunktionsschicht 12a und der Anodenkontaktschicht 17 ausgebildet.

Figur 4 deutet an, dass dabei beim Drucken Kontaktschichten 16, 17 das Material der Kontaktschichten 16, 17 teilweise in die porösen Anbindungsschichten 14b, 15b eindringen und so die Anbindung verbessern kann. Analog dazu - wenn auch in Figur 4 nicht angedeutet - kann Material der Kontaktschichten 16,17 teilweise in die porösen Gasführungsschichten 11b, 12b eindringen und so ebenfalls die Anbindung verbessern.

Im Rahmen der in Figur 4 gezeigten Ausführungsform sind die Kathodenkontaktschicht 16 und die Anodenkontaktschicht 17 durchgängig, insbesondere Gasführungskanal-frei, ausgebildet.

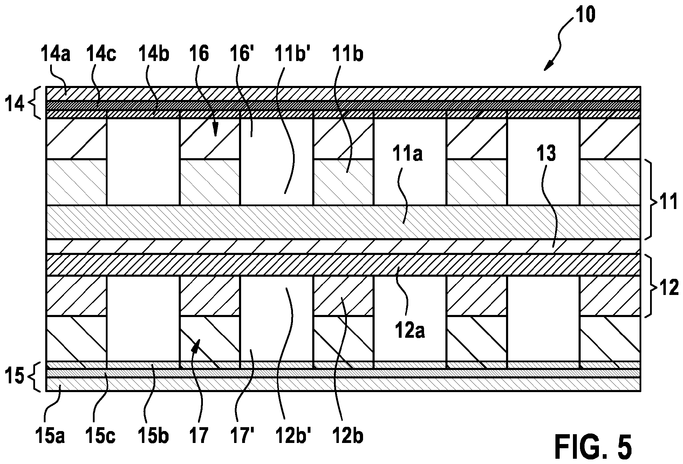

Die in Figur 5 gezeigte Ausführungsform unterscheidet sich im Wesentlichen dadurch von der in Figur 4 gezeigten Ausführungsform, dass Gasführungskanäle 16', 17' in der Kathodenkontaktschicht 16 und in der Anodenkontaktschicht 17 ausgebildet sind. Insbesondere überlappen dabei die Gasführungskanäle 16' der Kathodenkontaktschicht 16 mit den Gasführungskanälen 11b' der Kathodengasführungsschicht 11b und Gasführungskanäle 17' der Anodenkontaktschicht 17 mit den Gasführungskanälen 12b' der Anodengasführungsschicht 12b.

## Patentansprüche

1. Hochtemperaturzelle (10), umfassend
- eine Kathode (11),
- eine Anode (12) und
- einen zwischen der Kathode (11) und der Anode (12) angeordneten Elektrolyten (13),
wobei die Kathode (11) eine den Elektrolyten (13) bedeckende Kathodenfunktionsschicht (11a) und eine Gasführungskanäle (11b') ausbildende, poröse Kathodengasführungsschicht (11b) umfasst,
wobei die Kathodengasführungsschicht (11b) auf der Kathodenfunktionsschicht (11a) aufgebracht ist,
wobei die Kathodengasführungsschicht (11b) eine geringere Porosität als die Kathodenfunktionsschicht (11a) aufweist
und/oder
wobei die Anode (12) eine den Elektrolyten (13) bedeckende Anodenfunktionsschicht (12a) umfasst und eine Gasführungskanäle (12b') ausbildende, poröse Anodengasführungsschicht (12b) umfasst,
wobei die Anodengasführungsschicht (12b) auf der Anodenfunktionsschicht (12a) aufgebracht ist,
wobei die Anodengasführungsschicht (12b) eine geringere Porosität als die Anodenfunktionsschicht (12a) aufweist.

2. Hochtemperaturzelle (10) nach Anspruch 1, wobei die eine Gasführungskanäle (11b') ausbildende, poröse Kathodengasführungsschicht (11b) und/oder die eine Gasführungskanäle (12b') ausbildende, poröse Anodengasführungsschicht (12b) ein keramisches Material und/oder ein durch einen keramischen Prozess hergestelltes Material umfasst.

3. Hochtemperaturzelle (10) nach Anspruch 1 oder 2, wobei die eine Gasführungskanäle (11b') ausbildende, poröse Kathodengasführungsschicht (11b) und/oder die eine Gasführungskanäle (12b') ausbildende, poröse Anodengasführungsschicht (12b) ein Kathodenmaterial oder ein Anodenmaterial umfasst.

4. Hochtemperaturzelle (10) nach einem der Ansprüche 1 bis 3, wobei die Hochtemperaturzelle (10) eine zwischen der Kathode (11) und einem Interkonnektor (14) angeordnete Kathodenkontaktschicht (16) und/oder eine zwischen der Anode (12) und einem Interkonnektor (15) angeordnete Anodenkontaktschicht (17) aufweist,
insbesondere wobei die Kathodenkontaktschicht (16) und/oder die Anodenkontaktschicht (17) aus einem dichten Material ausgebildet ist.

5. Hochtemperaturzelle (10) nach Anspruch 4,
wobei Gasführungskanäle (16') in der Kathodenkontaktschicht (16) ausgebildet sind oder wobei die Kathodenkontaktschicht (16) durchgängig ausgebildet ist, und/oder
wobei Gasführungskanäle (17') in der Anodenkontaktschicht (17) ausgebildet sind oder wobei die Anodenkontaktschicht (17) durchgängig ausgebildet ist.

6. Hochtemperaturzelle (10) nach einem der Ansprüche 1 bis 5, wobei die Hochtemperaturzelle (10) mindestens einen planaren, insbesondere metallischen, Interkonnektor (14a,15a) umfasst.

7. Hochtemperaturzelle (10) nach Anspruch 6, wobei der mindestens eine Interkonnektor (14a, 14; 15a, 15) mit einer porösen Anbindungsschicht (14b; 15b) und/oder mit einer dichten Schutzschicht (14c; 15c) versehen ist, insbesondere wobei die poröse Anbindungsschicht (14b; 15b) aus dem gleichen Material wie die dichte Schutzschicht (14c, 15c) ausgebildet ist.

8. Hochtemperaturzelle (10) nach einem der Ansprüche 1 bis 7,
wobei die Kathodenfunktionsschicht (11a)
aus einer Mischung von Lanthanstrontiummanganoxid und dotiertem Zirkonoxid und/oder aus Lanthanstrontiumcobaltoxid und/oder aus Lanthanstrontiumeisenoxid und/oder aus Lanthanstrontiumcobalteisenoxid ausgebildet ist, und/oder
wobei die Kathodengasführungsschicht (11b) aus Lanthanstrontiummanganoxid und/oder Lanthanstrontiumcobaltoxid und/oder Lanthanstrontiumeisenoxid und/oder Lanthanstrontiumcobalteisenoxid ausgebildet ist; und/oder wobei die Anodenfunktionsschicht (12a) aus einer Mischung aus Nickel und dotiertem Zirkonoxid ausgebildet ist, und/oder
wobei die Anodengasführungsschicht (12b) aus Nickel ausgebildet ist, und/oder
wobei die Kathodenkontaktschicht (16) aus Lanthanstrontiummanganoxid und/oder Lanthanstrontiumcobaltoxid und/oder Lanthanstrontiumeisenoxid und/oder Lanthanstrontiumcobalteisenoxid ausgebildet ist; und/oder wobei die Anodenkontaktschicht (17) aus Nickel ausgebildet ist, und/oder wobei die poröse Anbindungsschicht (14b, 15b) aus einem Spinell und/oder einem Kathodenmaterial oder einem Anodenmaterial, insbesondere einem Spinell, ausgebildet ist, und/oder
wobei die dichte Schutzschicht (14c, 15c) aus einem Spinell ausgebildet ist.

9. Hochtemperaturzelle (10) nach einem der Ansprüche 1 bis 8, wobei die Hochtemperaturzelle eine Brennstoffzelle und/oder Elektrolysezelle und/oder Metall-Luft-Zelle ist.

10. Hochtemperaturzellenstack, umfassend einen Stapel aus zwei oder mehr Hochtemperaturzellen (10) nach einem der Ansprüche 1 bis 9.

11. Verfahren zur Herstellung einer, insbesondere planaren, Hochtemperaturzelle (10) nach einem der Ansprüche 1 bis 9 beziehungsweise eines Hochtemperaturzellenstacks nach Anspruch 10, umfassend die Verfahrensschritte:
- Drucken einer Kathodenfunktionsschicht (11a) und/oder Anodenfunktionsschicht (12a),
- Drucken einer Schicht (11b, 11b'; 12b, 12b') auf die Kathodenfunktionsschicht (11a) und/oder Anodenfunktionsschicht (12a), welche (11b, 11b'; 12b, 12b') abschnittsweise aus einem rückstandsfrei verbrennbaren Material, insbesondere Ruß, und abschnittsweise aus einer Vorstufe zur Ausbildung einer Kathodengasführungsschicht (11b) und/oder einer Anodengasführungsschicht (12b) ausgebildet ist,
- Cosintern der Schichten (11a, 11b, 11b';12a, 12b, 12b'), wobei das rückstandsfrei verbrennbare Material ausbrennt.

12. Verfahren nach Anspruch 11, wobei vor oder nach dem Cosintern der Schichten (11a, 11b, 11b'; 12a, 12b,12b') eine Kathodenkontaktschicht (16) oder eine Anodenkontaktschicht (17) auf einen Interkonnektor (14;15) oder auf die abschnittsweise ausgebildete Schicht (11b, 11b'; 12b, 12b') gedruckt wird, wobei die Schichtanordnung (11a, 11b, 11b'; 12a, 12b, 12b') und ein Interkonnektor (14; 15) derart gestapelt werden, dass die Kathodenkontaktschicht (16) beziehungsweise Anodenkontaktschicht (17) die Schichtanordnung (11a, 11b, 11b'; 12a, 12b, 12b') mit dem Interkonnektor (14;15) verbindet.

## Claims

1. High-temperature cell (10) comprising
- a cathode (11),
- an anode (12) and
- an electrolyte (13) arranged between the cathode (11) and the anode (12),
wherein the cathode (11) comprises a cathode functional layer (11a) covering the electrolyte (13), and a porous cathode gas conducting layer (11b) forming gas ducts (11b'),
wherein the cathode gas conducting layer (11b) has been applied to the cathode functional layer (11a), wherein the cathode gas conducting layer (11b) has lower porosity than the cathode functional layer (11a),
and/or
wherein the anode (12) comprises an anode functional layer (12a) covering the electrolyte (13), and a porous anode gas conducting layer (12b) forming gas ducts (12b'),
wherein the anode gas conducting layer (12b) has been applied to the anode functional layer (12a), wherein the anode gas conducting layer (12b) has lower porosity than the anode functional layer (12a).

2. High-temperature cell (10) according to Claim 1, wherein the porous cathode gas conducting layer (11b) forming gas ducts (11b') and/or the porous anode gas conducting layer (12b) forming gas ducts (12b') comprises a ceramic material and/or a material produced by a ceramic process.

3. High-temperature cell (10) according to Claim 1 or 2, wherein the porous cathode gas conducting layer (11b) forming gas ducts (11b') and/or the porous anode gas conducting layer (12b) forming gas ducts (12b') comprises a cathode material or an anode material.

4. High-temperature cell (10) according to one of Claims 1 to 3, wherein the high-temperature cell (10) has a cathode contact layer (16) arranged between the cathode (11) and an interconnector (14), and/or an anode contact layer (17) arranged between the anode (12) and an interconnector (15),
in particular wherein the cathode contact layer (16) and/or the anode contact layer (17) is made of an impervious material.

5. High-temperature cell (10) according to Claim 4,
wherein gas ducts (16') have been formed in the cathode contact layer (16) or wherein the cathode contact layer (16) is formed in a continuous manner, and/or
wherein gas ducts (17') have been formed in the anode contact layer (17) or wherein the anode contact layer (17) is formed in a continuous manner.

6. High-temperature cell (10) according to one of Claims 1 to 5, wherein the high-temperature cell (10) comprises at least one planar, in particular metal, interconnector (14a, 15a).

7. High-temperature cell (10) according to Claim 6, wherein the at least one interconnector (14a, 14; 15a, 15) has been provided with a porous bonding layer (14b; 15b) and/or with an impervious protective layer (14c; 15c), in particular wherein the porous bonding layer (14b; 15b) is made of the same material as the impervious protective layer (14c, 15c).

8. High-temperature cell (10) according to one of Claims 1 to 7,
wherein the cathode functional layer (11a) is made of a mixture of lanthanum-strontium-manganese oxide and doped zirconium oxide and/or of lanthanum-strontium-cobalt oxide and/or of lanthanum-strontium-iron oxide and/or of lanthanum-strontium-cobalt-iron oxide, and/or
wherein the cathode gas conducting layer (11b) is made of lanthanum-strontium-manganese oxide and/or lanthanum-strontium-cobalt oxide and/or lanthanum-strontium-iron oxide and/or lanthanum-strontium-cobalt-iron oxide; and/or
wherein the anode functional layer (12a) is made of a mixture of nickel and doped zirconium oxide, and/or
wherein the anode gas conducting layer (12b) is made of nickel, and/or
wherein the cathode contact layer (16) is made of lanthanum-strontium-manganese oxide and/or lanthanum-strontium-cobalt oxide and/or lanthanum-strontium-iron oxide and/or lanthanum-strontium-cobalt-iron oxide; and/or
wherein the anode contact layer (17) is made of nickel, and/or
wherein the porous bonding layer (14b, 15b) is made of a spinel and/or a cathode material or an anode material, in particular a spinel, and/or
wherein the impervious protective layer (14c, 15c) is made of a spinel.

9. High-temperature cell (10) according to one of Claims 1 to 8, wherein the high-temperature cell is a fuel cell and/or electrolysis cell and/or metal-air cell.

10. High-temperature-cell stack, comprising a stack of two or more high-temperature cells (10) according to one of Claims 1 to 9.

11. Method for producing an, in particular planar, high-temperature cell (10) according to one of Claims 1 to 9 or a high-temperature-cell stack according to Claim 10, comprising the method steps of:
- printing a cathode functional layer (11a) and/or anode functional layer (12a),
- printing a layer (11b, 11b'; 12b, 12b') onto the cathode functional layer (11a) and/or anode functional layer (12a), which (11b, 11b'; 12b, 12b') is made partially of a fully combustible material, in particular carbon black, and partially of a precursor for forming a cathode gas conducting layer (11b) and/or an anode gas conducting layer (12b),
- co-sintering the layers (11a, 11b, 11b'; 12a, 12b, 12b'), wherein the fully combustible material burns out.

12. Method according to Claim 11, wherein, before or after the co-sintering of the layers (11a, 11b, 11b'; 12a, 12b, 12b'), a cathode contact layer (16) or an anode contact layer (17) is printed on an interconnector (14; 15) or on the partially formed layer (11b, 11b'; 12b, 12b'), wherein the layer arrangement (11a, 11b, 11b'; 12a, 12b, 12b') and an interconnector (14; 15) are stacked such that the cathode contact layer (16) or the anode contact layer (17) joins the layer arrangement (11a, 11b, 11b'; 12a, 12b, 12b') to the interconnector (14; 15) .

## Revendications

1. Élément à haute température (10), comprenant
- une cathode (11),
- une anode (12) et
- un électrolyte (13) disposé entre la cathode (11) et l'anode (12),
dans lequel la cathode (11) comprend une couche à fonction de cathode (11a) recouvrant l'électrolyte (13) et une couche de guidage de gaz de cathode poreuse (11b) formant des conduits de guidage de gaz (11b'),
dans lequel la couche de guidage de gaz de cathode (11b) est déposée sur la couche à fonction de cathode (11a), dans lequel la couche de guidage de gaz de cathode (11b) présente une porosité inférieure à celle de la couche à fonction de cathode (11a), et/ou
dans lequel l'anode (12) comprend une couche à fonction d'anode (12a) recouvrant l'électrolyte (13) et comprend une couche de guidage de gaz d'anode poreuse (12b) formant des conduits de guidage de gaz (12b'),
dans lequel la couche de guidage de gaz d'anode (12b) est déposée sur la couche à fonction d'anode (12a),
dans lequel la couche de guidage de gaz d'anode (12b) présente une porosité inférieure à celle de la couche à fonction d'anode (12a).

2. Élément à haute température (10) selon la revendication 1, dans lequel la couche de guidage de gaz de cathode poreuse (11b) formant des conduits de guidage de gaz (11b') et/ou la couche de guidage de gaz d'anode poreuse (12b) formant des conduits de guidage de gaz (12b') comprend un matériau céramique et/ou un matériau obtenu par un processus céramique.

3. Élément à haute température (10) selon la revendication 1 ou 2,
dans lequel la couche de guidage de gaz de cathode poreuse (11b) formant des conduits de guidage de gaz (11b') et/ou la couche de guidage de gaz d'anode poreuse (12b) formant des conduits de guidage de gaz (12b') comprend/comprennent un matériau de cathode ou un matériau d'anode.

4. Élément à haute température (10) selon l'une quelconque des revendications 1 à 3, dans lequel l'élément à haute température (10) comporte une couche de contact de cathode (16) disposée entre la cathode (11) et un interconnecteur (14) et/ou une couche de contact d'anode (17) disposée entre l'anode (12) et un interconnecteur (15),
en particulier dans lequel la couche de contact de cathode (16) et/ou la couche de contact d'anode (17) est/sont constituée(s) d'un matériau dense.

5. Élément à haute température (10) selon la revendication 4,
dans lequel des conduits de guidage de gaz (16') sont formés dans la couche de contact de cathode (16) ou dans lequel la couche de contact de cathode (16) est formée de manière continue, et/ou
dans lequel des conduits de guidage de gaz (17') sont formés dans la couche de contact d'anode (17) ou dans lequel la couche de contact d'anode (17) est formée de manière continue.

6. Élément à haute température (10) selon l'une quelconque des revendications 1 à 5, dans lequel l'élément à haute température (10) comprend au moins un interconnecteur plan (14a, 15a), en particulier métallique.

7. Élément à haute température (10) selon la revendication 6, dans lequel ledit au moins un interconnecteur (14a, 14 ; 15a, 15) est pourvu d'une couche de liaison poreuse (14b ; 15b) et/ou d'une couche de protection dense (14c ; 15c), en particulier dans lequel la couche de liaison poreuse (14b ; 15b) est constituée du même matériau que la couche de protection dense (14c, 15c).

8. Élément à haute température (10) selon l'une quelconque des revendications 1 à 7,
dans lequel la couche à fonction de cathode (11a) est constituée d'un mélange d'oxyde de lanthane-strontium-manganèse et d'oxyde de zirconium dopé et/ou d'oxyde de lanthane-strontium-cobalt et/ou d'oxyde de lanthane-strontium-fer et/ou d'oxyde de lanthane-strontium-cobalt-fer, et/ou
dans lequel la couche de guidage de gaz de cathode (11b) est constituée d'oxyde de lanthane-strontium-manganèse et/ou d'oxyde de lanthane-strontium-cobalt et/ou d'oxyde de lanthane-strontium-fer et/ou d'oxyde de de lanthane-strontium-cobalt-fer ; et/ou
dans lequel la couche à fonction d'anode (12a) est constituée d'un mélange de nickel et d'oxyde de zirconium dopé, et/ou
dans lequel la couche de guidage de gaz d'anode (12b) est constituée de nickel, et/ou
dans lequel la couche de contact de cathode (16) est constituée d'oxyde de lanthane-strontium-manganèse et/ou d'oxyde de lanthane-strontium-cobalt et/ou d'oxyde de lanthane-strontium-fer et/ou d'oxyde de lanthane-strontium-cobalt-fer ; et/ou
dans lequel la couche de contact d'anode (17) est constituée de nickel, et/ou
dans lequel la couche de liaison poreuse (14b, 15b) est constituée d'une spinelle et/ou d'un matériau de cathode ou d'un matériau d'anode, en particulier d'une spinelle, et/ou
dans lequel la couche protectrice dense (14c, 15c) est constituée d'une spinelle.

9. Élément à haute température (10) selon l'une quelconque des revendications 1 à 8,
dans lequel l'élément à haute température est une pile à combustible et/ou une pile à électrolyse et/ou une pile métal-air.

10. Empilement d'éléments à haute température comprenant un empilement de deux ou plusieurs éléments à haute température (10) selon l'une quelconque des revendications 1 à 9.

11. Procédé de fabrication d'un élément à haute température (10), en particulier plan, selon l'une quelconque des revendications 1 à 9 ou d'un empilement d'éléments à haute température selon la revendication 10, comprenant les étapes consistant à :
- imprimer une couche à fonction de cathode (11a) et/ou d'une couche à fonction d'anode (12a),
- imprimer une couche (11b, 11b' ; 12b, 12b') sur la couche à fonction de cathode (11a) et/ou sur la couche à fonction d'anode (12a), qui (11b, 11b' ;12b, 12b') est formée par sections d'un matériau combustible exempt de résidu, en particulier de noir de carbone, et par sections d'un stade préliminaire de formation d'une couche de guidage de gaz de cathode (11b) et/ou d'une couche de guidage de gaz d'anode (12b),
- fritter conjointement les couches (11a, 11b, 11b' ; 12a, 12b, 12b'), dans lequel le matériau combustible exempt de résidu est soumis à une combustion.

12. Procédé selon la revendication 11, dans lequel, avant ou après le frittage conjoint des couches (11a, 11b, 11b' ; 12a, 12b, 12b'), une couche de contact de cathode (16) ou une couche de contact d'anode (17) est imprimée sur un interconnecteur (14 ; 15) ou sur la couche (11b, 11b' ; 12b, 12b') formée par sections, dans lequel l'agencement de couches (11a, 11b, 11b' ; 12a, 12b, 12b') et un interconnecteur (14 ; 15) sont empilés de telle sorte que la couche de contact de cathode (16) ou la couche de contact d'anode (17) relie respectivement l'agencement de couches (11a, 11b, 11b' ; 12a, 12b, 12b') à l'interconnecteur (14 ; 15).
